# FASCICULE DE BREVET EUROPEEN

(11) **EP 1 820 613 B1**
(45) Date de publication et mention de la délivrance du brevet: **19.05.2010**
(21) Numéro de dépôt: 07290190.3
(22) Date de dépôt: 15.02.2007
(51) Int. Cl.: B26D 7/08, B26D 3/26, A21C 1/14, B26D 7/26, B26D 3/18, B26D 1/553

(54) **Outil de tranchage perfectionné pour appareil de préparation alimentaire et procédé de fabrication**
Perfektioniertes Tranchierwerkzeug für ein Gerät zur Lebensmittelzubereitung und Verfahren zu dessen Herstellung
Improved cutting tool for a food preparation device, and manufacturing method

(30) Priorité: 16.02.2006 FR 0601377
(43) Date de publication de la demande: 22.08.2007
(73) Titulaire: Electrolux Professionnel, 60300 Senlis (FR)
(72) Inventeur: Lallier, Christian, 23200 Aubusson (FR); Descomps, Xavier, 23200 Blessac (FR)
(74) Mandataire: Domenego, Bertrand

(56) Documents cités:
- GB-A- 965 405
- US-A- 2 786 502
- US-A- 3 208 309
- US-A- 4 334 557
- US-A1- 2006 011 027
- US-B1- 6 601 491

## Description

L'invention concerne un outil de tranchage pour appareil de préparation alimentaire, et plus particulièrement un outil prévu pour couper des légumes (notamment des pommes de terre) en plusieurs bâtonnets de façon rectiligne et régulière.

Un tel outil est conçu comme une grille au travers de laquelle sont forcés les produits à trancher.

Un outil de tranchage avec de lames précontraintes est connu du brevet GB 965 405 A, sur lequel le préambule se base.

Plus particulièrement, l'invention concerne un outil de tranchage comprenant un cadre, et une pluralité de lames de coupe, fixées au cadre à l'intérieur de ce dernier.

Dans de tels outils, certaines lames s'étendent sur une longueur relativement importante d'un bord à un autre du cadre, et seules leurs extrémités sont fixées à cette structure rigide. Ces lames sont donc susceptibles de se déformer en flexion ou en torsion lors de l'utilisation de l'outil, ce qui nuit à la régularité de la coupe, et plus généralement à l'efficacité de l'outil.

Cet inconvénient est particulièrement sensible lorsque l'outil est conçu pour des appareils de préparation alimentaire devant être utilisés dans la restauration professionnelle, eu égard aux grandes dimensions de l'outil et par conséquent aux longueurs importantes des lames de coupe.

L'invention a pour but de remédier à cet inconvénient, et de proposer un outil du type précédemment exposé, qui soit simple de fabrication et qui garantisse une régularité de coupe optimale.

A cet effet, l'invention a pour objet un outil du type précité, dans lequel le cadre est au moins partiellement réalisé en matière plastique moulée, et les lames sont précontraintes en étirement selon leur orientation.

Suivant d'autres caractéristiques, optionnelles, de l'invention :
- les deux demi-cadres sont surmoulés sur les lames.
- le cadre est partiellement surmoulé sur les lames ;
- les lames de coupe sont toutes orientées selon une même direction de coupe ;
- le cadre est de forme générale circulaire, et l'outil comprend un manchon central coaxial en matière plastique surmoulée sur les lames les plus centrales, ces dernières s'étendant de part et d'autre du manchon entre le manchon et le cadre ;
   Selon l'invention le cadre comprend :
   - deux demi-cadres opposés, ayant chacun deux extrémités libres, qui sont chacune en vis-à-vis et espacées d'une extrémité libre respective de l'autre demi-cadre, et
   - deux éléments d'entretoise, rapportés sur les deux demi-cadres respectivement à leurs deux extrémités en vis-à-vis après mise en précontrainte des lames, les éléments d'entretoise assurant la solidarisation des deux demi-cadres à leurs extrémités libres en conservant une précontrainte dans les lames ;
- les éléments d'entretoise sont réalisés en matière plastique et rapportés par surmoulage sur les deux demi-cadres ; et

L'invention a également pour objet un procédé de fabrication d'un tel outil, dans lequel :
a - on relie les deux demi-cadres aux lames, et on précontraint les lames en étirement selon la direction de coupe, et
b - on rapporte les deux éléments d'entretoise sur les deux demi-cadres de façon à solidariser les deux demi-cadres à leurs extrémités libres en conservant une précontrainte dans les lames après la fin de la fabrication de l'outil.
- on réalise les éléments d'entretoise en matière plastique, et l'étape consistant à rapporter les éléments d'entretoise est réalisée par surmoulage de ces derniers sur les deux demi-cadres.

De préférence, dans le procédé de fabrication conforme à l'invention :
- on réalise les deux demi-cadres en matière plastique, et on relie les deux demi-cadres aux lames en formant les deux demi-cadres par surmoulage sur les lames ; et

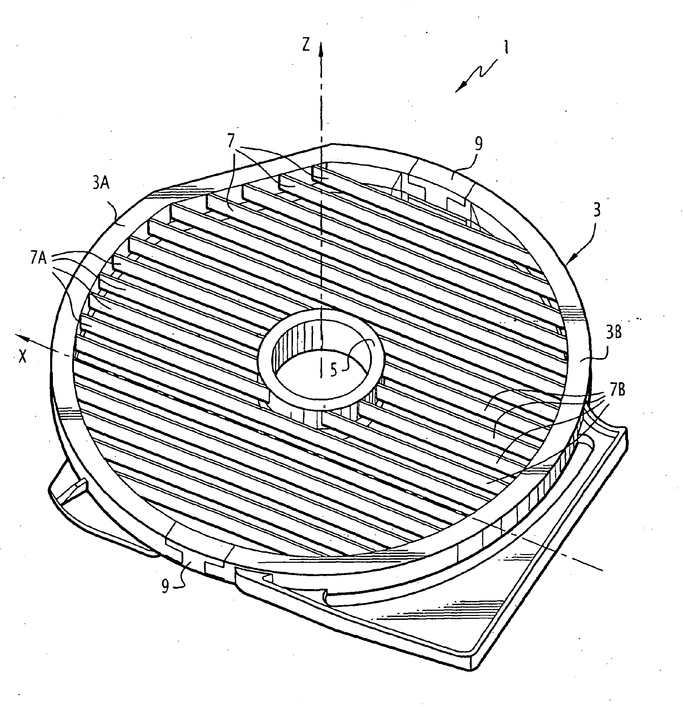

Un mode particulier de réalisation de l'invention va maintenant être décrit plus en détail en référence à la Figure unique ci-annexée, qui est une vue en perspective d'un outil selon l'invention.

Sur la Figure, on a représenté un outil ou grille de tranchage 1 conforme à l'invention, du type prévu pour être monté dans un appareil à actionnement manuel ou électrique.

Dans un tel appareil (non représenté), la grille 1 est par exemple fixée sur un bâti, et associée à un plateau presseur mobile.

Le plateau presseur est monté rotatif autour de son axe Z par rapport au bâti, et comporte une lame de coupe radiale. Dans une première phase de fonctionnement de l'appareil, le plateau est mis en rotation autour de l'axe Z, de manière à trancher dans une première direction les légumes chargés dans l'appareil. Dans une deuxième phase de fonctionnement, le plateau est déplacé en translation selon l'axe X de sorte à faire passer les légumes, une fois tranchés par la lame radiale du plateau, au travers de la grille, et ainsi découper les légumes en bâtonnets.

La grille 1 comprend essentiellement un cadre 3 en matière plastique de forme générale circulaire d'axe Z, un manchon central co-axial 5, également en matière plastique, et une série de lames métalliques 7, 7A, 7B, toutes parallèles.

Les lames 7, 7A, 7B sont formées comme des bandes métalliques essentiellement planes, s'étendant chacune dans un plan XZ parallèle à l'axe Z de la grille, c'est-à-dire dans un plan orthogonal au plan de la section circulaire du cadre 3. Les bords des lames 7, 7A, 7B, tous parallèles entre eux, définissent l'orientation des lames et la direction de coupe X orthogonales à l'axe Z.

Les lames 7, 7A, 7B s'étendent à l'intérieur du cadre 3, en étant solidaire de ce dernier à l'une au moins de leurs extrémités.

Les lames 7 sont solidaires du cadre 3 à leurs deux extrémités, tandis que les lames 7A, 7B, qui sont les lames les plus centrales (par rapport à la section circulaire du cadre 3), sont solidaires du cadre 3 à l'une seulement de leurs extrémités, et solidaires du manchon 5 à leur autre extrémité.

Les lames 7A, 7B s'étendent de part et d'autre du manchon 5, chacune parmi les lames 7A s'étendant dans le prolongement d'une lame correspondante 7B.

Le cadre 3 est essentiellement formé de deux demi-cadres 3A, 3B en forme de C, et de deux éléments d'entretoise 9.

Les deux demi-cadres 3A, 3B sont disposés en vis-à-vis, symétriquement par rapport à un plan axial Z, chaque extrémité d'un demi-cadre étant dans le prolongement et espacée de l'extrémité correspondante de l'autre demi-cadre.

Les deux demi-cadres 3A, 3B sont reliés entre eux par les deux éléments d'entretoise 9, chacun des deux éléments d'entretoise 9 assurant une liaison solidaire rigide entre les deux extrémités en vis-à-vis des deux demi-cadres 3A, 3B.

Les deux demi-cadres 3A, 3B sont surmoulés sur les lames 7, 7A, 7B, et le manchon 5 est surmoulé sur les lames les plus centrales 7A, 7B aux extrémités de ces dernières tournées vers le centre du cadre 3.

Les éléments d'entretoise 9 sont surmoulés sur les deux demi-cadres 3A, 3B.

Plus précisément, le procédé de fabrication de la grille 1 qui vient d'être décrite comprend les étapes de fabrication successives suivantes :
- dans une première étape, on surmoule les deux demi-cadres 3A, 3B sur les lames 7, 7A, 7B, et on précontraint les lames en étirement selon la direction X ; et
- dans une deuxième étape de fabrication, après retrait de la matière plastique constituant les demi-cadres 3A, 3B, dû au refroidissement de la pièce, on surmoule les éléments d'entretoise 9 sur les demi-cadres 3A, 3B.

Cette dernière opération est réalisée de façon à maintenir l'écartement des deux demi-cadres 3A, 3B après durcissement des pièces d'entretoise, et ainsi solidariser les deux demi-cadres 3A, 3B en maintenant les lames 7 dans un état précontraint en traction (ou étirement) suivant leur direction longitudinale X définissant la direction de coupe.

Grâce à ce procédé de fabrication, il est possible d'obtenir une grille avec des lames précontraintes en tension, avec un cadre en matière plastique.

La technique de surmoulage de pièces d'entretoise, qui est utilisée dans l'invention, permet de compenser les effets de retrait de la matière plastique moulée après refroidissement de la pièce. Un tel effet serait pénalisant si le cadre était réalisé en une seule opération de moulage, car il conduirait à une déformation des lames après retrait, notamment des lames les plus longues, et en conséquence à une efficacité dégradée de l'outil.

Selon un mode de réalisation alternatif, il peut être envisagé de réaliser les pièces d'entretoise séparément du reste du cadre, par exemple en métal, et de les fixer sur les demi-cadres en maintenant les lames sous contrainte de traction.

## Revendications

1. Outil de tranchage pour appareil de préparation alimentaire, comprenant
- un cadre (3), et
- une pluralité de lames de coupe (7), fixées au cadre (3) à l'intérieur de ce dernier, les lames (7) étant précontraintes en étirement selon leur orientation (X),
**caractérisé en ce que** le cadre (3) est au moins partiellement réalisé en matière plastique moulée, et **en ce que** le cadre (3) comprend :
- deux demi-cadres (3A, 3B) opposés, ayant chacun deux extrémités libres, qui sont chacune en vis-à-vis et espacées d'une extrémité libre respective de l'autre demi-cadre (3A, 3B), et
- deux éléments d'entretoise (9), rapportés sur les deux demi-cadres (3A, 3B) respectivement à leurs deux extrémités en vis-à-vis après mise en précontrainte des lames (7), les éléments d'entretoise (9) assurant la solidarisation des deux demi-cadres (3A, 3B) à leurs extrémités libres en conservant une précontrainte dans les lames (7), les éléments d'entretoise (9) étant réalisés en matière plastique et rapportés par surmoulage sur les deux demi-cadres (3A, 3B).

2. Outil suivant la revendication 1, **caractérisé en ce que** le cadre (3) est partiellement surmoulé sur les lames (7).

3. Outil suivant la revendication 1 ou 2, **caractérisé en ce que** les lames de coupe (7) sont toutes orientées selon une même direction de coupe (X).

4. Outil suivant l'une quelconque des revendications 1 à 3, **caractérisé en ce que** le cadre (3) est de forme générale circulaire, et l'outil comprend un manchon central coaxial (5) en matière plastique surmoulée sur les lames (7A, 7B) les plus centrales, ces dernières s'étendant de part et d'autre du manchon (5) entre le manchon et le cadre (3).

5. Outil suivant l'une quelconque des revendications 1 à 4, **caractérisé en ce que** les deux demi-cadres (3A, 3B) sont surmoulés sur les lames (7).

6. Procédé de fabrication d'un outil selon l'une quelconque des revendications 1 à 5, dans lequel on réalise les étapes successives suivantes :
a - on relie les deux demi-cadres (3A, 3B) aux lames (7), et on précontraint les lames (7) en étirement selon la direction de coupe (X) ; et
b - on rapporte les deux éléments d'entretoise (9) sur les deux demi-cadres (3A, 3B) de façon à solidariser les deux demi-cadres à leurs extrémités libres en conservant une précontrainte dans les lames (7) après la fin de la fabrication de l'outil, on réalise les éléments d'entretoise (9) en matière plastique, et rapporte les éléments d'entretoise (9) par surmoulage de ces derniers sur les deux demi-cadres (3A, 3B).

7. Procédé suivant la revendication 6, **caractérisé en ce qu'**on réalise les deux demi-cadres (3A, 3B) en matière plastique, et on relie les deux demi-cadres (3A, 3B) aux lames (7) en formant les deux demi-cadres par surmoulage sur les lames (7).

## Claims

1. Slicing tool for a food preparation device, comprising
- a frame (3) and
- a plurality of cutting blades (7) which are fixed to the frame (3) inside the frame, the blades (7) being prestressed in tension in accordance with their orientation (X), **characterised in that** the frame (3) is at least partially constructed from moulded plastics material and **in that** the frame (3) comprises:
- two opposing half-frames (3A, 3B), each having two free ends which each face and are spaced apart from a free end of the other half-frame (3A, 3B) and
- two bracing elements (9) which are fitted to the two half-frames (3A, 3B) at the two ends thereof which face each other after the blades (7) have been prestressed, the bracing elements (9) ensuring the fixing of the two half-frames (3A, 3B) at the free ends thereof and maintaining prestressing in the blades (7), the bracing elements (9) being constructed from plastics material and being fitted to the two half-frames (3A, 3B) by overmoulding.

2. Tool according to claim 1, **characterised in that** the frame (3) is partially overmoulded on the blades (7).

3. Tool according to claim 1 or claim 2, **characterised in that** the cutting blades (7) are all orientated in the same cutting direction (X).

4. Tool according to any one of claims 1 to 3, **characterised in that** the frame (3) is of generally circular shape and the tool comprises a central coaxial sleeve (5) which is of plastics material and which is overmoulded on the blades (7A, 7B) that are most central, those blades extending at one side and the other of the sleeve (5) between the sleeve and the frame (3).

5. Tool according to any one of claims 1 to 4, **characterised in that** the two half-frames (3A, 3B) are overmoulded on the blades (7).

6. Method for producing a tool according to any one of claims 1 to 5, wherein the following successive steps are carried out:
a - the two half-frames (3A, 3B) are connected to the blades (7) and the blades (7) are prestressed in tension in the cutting direction (X) ; and
b - the two bracing elements (9) are fitted to the two half-frames (3A, 3B) so as to fixedly join the two half-frames at the free ends thereof whilst maintaining prestressing in the blades (7) after the production of the tool has finished, the bracing elements (9) are constructed from plastics material and the bracing elements (9) are fitted by being overmoulded on the two half-frames (3A, 3B).

7. Method according to claim 6, **characterised in that** the two half-frames (3A, 3B) are produced from plastics material and the two half-frames (3A, 3B) are connected to the blades (7), with the two half-frames being formed by being overmoulded on the blades (7).

## Patentansprüche

1. Tranchierwerkzeug für ein Gerät zur Lebensmittelzubereitung mit
- einem Rahmen (3) und
- einer Vielzahl von Schneidmessern (7), welche an dem Rahmen (3) in dessen Innenraum befestigt sind, wobei die Messer (7) gemäß ihrer Ausrichtung (X) in Streckung vorgespannt sind,
**dadurch gekennzeichnet, dass** der Rahmen (3) zumindest teilweise aus geformten Kunststoffmaterial ausgeführt ist, und dass der Rahmen (3) aufweist:
- zwei gegenüber liegende Halbrahmen (3A, 3B), von denen jeder zwei freie Enden aufweist, welche jeweils einander gegenüber liegen und von einem jeweiligen freien Ende des anderen Halbrahmens (3A, 3B) beabstandet angeordnet sind, und
- zwei Stegelemente (9), die auf die beiden Halbrahmen (3A, 3B) jeweils an ihren beiden gegenüber liegenden Enden nach Vorspannen der Messer (7) aufgesetzt werden, wobei die Stegelemente (9) die einstückige Ausbildung der beiden Halbrahmen (3A, 3B) an ihren freien Enden unter Bewahrung einer Vorspannung in den Messern (7) sicherstellen, wobei die Stegelemente (9) aus Kunststoffmaterial ausgeführt und durch Abformen auf die beiden Halbrahmen (3A, 3B) aufgesetzt sind.

2. Werkzeug gemäß Anspruch 1, **dadurch gekennzeichnet, dass** der Rahmen (3) teilweise über die Messer (7) geformt ist.

3. Werkzeug gemäß Anspruch 1 oder 2, **dadurch gekennzeichnet, dass** die Schneidmesser (7) alle gemäß einer gleichen Schneidrichtung (X) ausgerichtet sind.

4. Werkzeug gemäß irgendeinem der Ansprüche 1 bis 3, **dadurch gekennzeichnet, dass** der Rahmen (3) eine allgemein kreisförmige Form aufweist und das Werkzeug einen koaxialen zentralen Stutzen (5) aus über die zentralsten Messer (7) geformten Kunststoffmaterial aufweist, wobei diese letzteren sich beidseits von dem Stutzen (5) zwischen dem Stutzen und dem Rahmen (3) erstrecken.

5. Werkzeug gemäß irgendeinem der Ansprüche 1 bis 4, **dadurch gekennzeichnet, dass** die beiden Halbrahmen (3A, 3B) über die Messer (7) geformt sind.

6. Verfahren zur Herstellung eines Werkzeugs gemäß irgendeinem der Ansprüche 1 bis 5, bei welchem die nachfolgenden aufeinander folgenden Schritte durchgeführt werden:
a - die beiden Halbrahmen (3A, 3B) werden mit den Messern (7) verbunden und die Messer (7) werden gemäß der Schneidrichtung (X) in Streckung vorgespannt; und
b - die beiden Stegelemente (9) werden auf die beiden Halbrahmen (3A, 3B) derart aufgesetzt, dass sie die beiden Halbrahmen an ihren freien Enden miteinander eintückig ausbilden unter Beibehaltung einer Vorspannung in den Messern (7) nach Beendigung der Herstellung des Werkzeugs;
c - die Stegelemente (9) werden aus Kunststoffmaterial hergestellt und die Stegelemente (9) werden durch Abformen dieser letzteren auf die beiden Halbrahmen (3A, 3B) aufgesetzt.

7. Verfahren gemäß Anspruch 6, **dadurch gekennzeichnet, dass** die beiden Halbrahmen (3A, 3B) aus Kunststoffmaterial hergestellt werden und die beiden Halbrahmen (3A, 3B) mit den Messern (7) verbunden werden, indem die beiden Halbrahmen durch Abformen auf den Messern (7) geformt werden.
